# FASCICULE DE BREVET EUROPEEN

(11) **EP 3 125 386 B1**
(45) Date de publication et mention de la délivrance du brevet: **07.04.2021**
(21) Numéro de dépôt: 16181577.4
(22) Date de dépôt: 28.07.2016
(51) Int. Cl.: H02G 1/14, H02G 15/04, H02G 15/18

(54) **ENSEMBLE POUR RECOUVRIR À ENSERREMENT UN ÉLÉMENT ALLONGÉ AVEC UN CORPS TUBULAIRE ÉLASTIQUE DE PROTECTION**
EINHEIT ZUR UMMANTELUNG EINES LÄNGLICHEN ELEMENTS MIT EINER ELASTISCHEN SCHUTZHÜLLE
UNIT FOR TIGHTLY COVERING AN ELONGATE ELEMENT WITH A RESILIENT PROTECTIVE SLEEVE

(30) Priorité: 28.07.2015 FR 1557229
(43) Date de publication de la demande: 01.02.2017
(73) Titulaire: Societe Industrielle de Construction d'Appareils et de Materiel Electriques, 19230 Arnac Pompadour (FR)
(72) Inventeur: CAPITANI, Adrien, 87380 MAGNAC BOURG (FR)
(74) Mandataire: Santarelli

(56) Documents cités:
- EP-A1- 0 815 624
- WO-A1-02/07280
- WO-A1-95/11542
- DE-C- 474 991

## Description

L'invention concerne la pose d'un corps tubulaire élastique de protection sur un élément allongé tel qu'un câble électrique ou deux câbles électriques joints l'un à l'autre.

On sait qu'un tel corps tubulaire élastique se présente en général sous la forme d'un capuchon, fermé à une extrémité comme un doigt de gant, ou sous la forme d'un manchon, ouvert aux deux extrémités ; qu'un tel corps est fabriqué en une matière élastique avec des dimensions telles qu'il est dilaté par rapport à l'état naturel (état qu'il prend en l'absence de contraintes externes) quand il contient dans son espace interne l'élément allongé, de sorte que le corps enserre l'élément allongé ; et qu'une fois posé sur l'élément allongé, un tel corps procure une étanchéité à l'air et à l'eau et/ou une isolation électrique.

On connait déjà des ensembles comportant un tel corps et un noyau tubulaire de maintien du corps en expansion, c'est-à-dire dans un état dilaté radialement par rapport à l'état naturel. Le noyau est ainsi recouvert à enserrement par le corps tubulaire. L'espace interne au noyau est configuré pour recevoir intérieurement l'élément allongé qui doit être recouvert par le corps de protection.

Avec un tel ensemble, la pose du corps tubulaire élastique de protection sur l'élément allongé s'effectue en introduisant l'élément allongé dans l'espace interne au noyau puis le noyau est entrainé pour qu'il coulisse à la fois par rapport à l'élément allongé et par rapport au corps. N'étant plus soutenu intérieurement par le noyau, le corps se contracte sur l'élément allongé. Lorsque le noyau est entièrement extrait, le corps recouvre à enserrement l'élément allongé.

La demande PCT WO 95/11542 décrit un tel ensemble, comportant :
- un manchon élastique de protection ; et
- un noyau tubulaire de maintien en expansion du manchon, lequel noyau comporte une première partie, qui est rigide, et une deuxième partie assujettie bout-à-bout à la première partie, laquelle deuxième partie est souple et retournée pour reposer sur la surface circonférentielle externe de la première partie, le noyau étant configuré pour qu'une traction exercée alors sur la première partie du côté autre que celui par lequel la première partie et la deuxième partie sont assujetties, fasse glisser la première partie vis-à-vis de la deuxième partie suivant un mouvement axial jusqu'à une position déployée où la deuxième partie s'est entièrement remise dans le prolongement de la première partie (la deuxième partie n'a plus aucun tronçon retourné).

Dans cet ensemble, la deuxième partie facilite le mouvement d'extraction de la première partie, qui n'a pas à glisser directement sur le manchon.

La deuxième partie ne reste pas dans le manchon mais est entrainée hors de celui-ci avec la première partie, étant donné que la première partie et la deuxième partie sont assujetties bout-à-bout.

L'invention vise à fournir un ensemble du même genre mais plus économique à obtenir tout en restant simple et commode à utiliser.

L'invention propose à cet effet un ensemble selon la revendication 1.

De même que dans l'ensemble antérieur susmentionné, dans l'ensemble selon l'invention la traction exercée sur la première partie du noyau permet de la déplacer axialement par rapport à l'élément allongé et par rapport au corps tubulaire élastique pour que celui-ci vienne recouvrir à enserrement l'élément allongé. La deuxième partie facilite le mouvement d'extraction de la première partie qui n'a pas à glisser directement sur le corps tubulaire élastique. La deuxième partie ne reste pas dans le corps tubulaire élastique mais est entrainée hors de celui-ci avec la première partie lorsqu'elle est extraite hors du corps tubulaire élastique.

En revanche, contrairement à l'ensemble antérieur susmentionné, où la deuxième partie du noyau est souple, retournée sur la surface externe de la première partie et assujettie bout-à-bout à la première partie, dans l'ensemble selon l'invention la première partie coulisse conventionnellement dans la deuxième partie, c'est-à-dire que la première partie se déplace par rapport à la totalité de la deuxième partie entre la position de service et la position déployée, qui sont fixées conventionnellement par des butées de fin de course.

Le caractère déformable de la deuxième partie du noyau de l'ensemble selon l'invention ne sert pas à permettre de retourner la deuxième partie sur la première partie, mais à permettre que le tronçon de la deuxième partie axialement au-delà de la première partie, lequel tronçon est formé par les pattes, prenne une forme globalement tronconique.

Le tronçon de la deuxième partie axialement au-delà de la première partie prend une forme tronconique en raison de la sollicitation exercée par le corps tubulaire élastique sur les pattes, qui n'entourent plus la première partie, et en raison de ce que les pattes s'inclinent les unes vers les autres sous l'effet de cette sollicitation.

La forme globalement tronconique prise par le tronçon de la deuxième partie axialement au-delà de la première partie favorise l'extraction de la deuxième partie hors du corps tubulaire élastique, cette forme permettant de bénéficier d'une force d'expulsion de la deuxième partie par le corps tubulaire élastique du fait qu'il se contracte, ce qui rend l'ensemble selon l'invention simple et commode à utiliser.

L'obtention du noyau de l'ensemble selon l'invention, qui demande simplement d'associer la première partie à la deuxième partie pour qu'elles puissent coulisser conventionnellement l'une par rapport à l'autre, est bien plus économique que l'obtention du noyau de l'ensemble antérieur susmentionné, qui nécessite d'assujettir bout-à-bout une partie rigide et une partie souple puis de retourner la partie souple sur la partie rigide, ce qui est relativement complexe et onéreux.

On notera que la demande PCT WO 02/07280 décrit un ensemble du même genre que celui décrit par la demande PCT WO 95/11542 ou celui objet de la revendication 1, mais avec quatre noyaux indépendants insérés les uns dans les autres, respectivement, de l'extérieur vers l'intérieur, un premier noyau ayant une partie expansible insérée dans un manchon élastique et une partie annulaire rigide qui reste hors du manchon, un deuxième noyau ayant une partie expansible insérée dans la partie expansible du premier noyau et une partie annulaire rigide insérée dans la partie annulaire rigide du premier noyau, un troisième noyau entièrement rigide inséré dans le deuxième noyau et un quatrième noyau entièrement rigide inséré dans le troisième noyau. La partie expansible du premier noyau est formée par des pattes saillant axialement de la partie annulaire rigide du premier noyau et reliées les unes aux autres exclusivement par la partie annulaire rigide du premier noyau. La partie expansible du deuxième noyau est formée par des pattes saillant axialement de la partie annulaire rigide du deuxième noyau et reliées les unes aux autres exclusivement par la partie annulaire rigide du deuxième noyau. Les quatre noyaux ont des longueurs différentes et sont introduits successivement afin de permettre une expansion progressive du manchon. Pour opérer la pose du manchon élastique sur un câble introduit dans le quatrième noyau, les quatre noyaux sont entièrement extraits un à un par traction, dans l'ordre inverse d'introduction, c'est-à-dire que c'est d'abord le quatrième noyau qui est entièrement extrait par traction puis le troisième noyau est entièrement extrait par traction puis le deuxième noyau est entièrement extrait par traction puis le premier noyau est entièrement extrait par traction.

Pour revenir à l'ensemble selon l'invention, par exemple, la première partie et la deuxième partie du noyau sont en matière plastique moulée assemblée l'une à l'autre par encliquetage WO 02/07280 A1 divulgue un dispositif permettant d'appliquer un manchon radialement expansible et récupérable sur un article allongé tel qu'un câble. DE 474 991 C révèle un dispositif d'écartement permettant d'étendre un élément élastique tubulaire sur un conducteur électrique.

L'exposé de l'invention sera maintenant poursuivi par la description détaillée d'exemples de réalisation en référence aux dessins annexés. Sur ceux-ci :
- la figure 1 est une vue en perspective d'un ensemble selon l'invention ;
- la figure 2 est une vue en coupe d'un tronçon d'extrémité de câble électrique sur lequel est mis en place le capuchon élastique de protection que comporte l'ensemble de la figure 1 ;
- la figure 3 est une vue semblable à la figure 2, mais montrant le seul capuchon de protection, à l'état naturel, c'est-à-dire à l'état qu'il prend en l'absence de contraintes externes ;
- la figure 4 est une vue en perspective du capuchon à l'état naturel ;
- la figure 5 est une vue en perspective de l'ensemble de la figure 1 après qu'un tronçon d'extrémité d'un câble électrique a été inséré dans l'espace interne à son noyau et que la première partie du noyau a été entraînée dans le sens de la traction, la position du noyau illustrée étant la position déployée où la première partie ne peut plus se déplacer vis-à-vis de la deuxième partie dans le sens de la traction ;
- la figure 6 est une vue semblable à la figure 5, mais en élévation prise depuis le côté que l'on voit à droite sur la figure 5 ;
- les figures 7 et 8 sont des vues respectivement en perspective et en élévation, semblables aux figures 5 et 6, mais montrant le seul noyau de l'ensemble ;
- la figure 9 est une vue semblable à la figure 7, mais avec le noyau en position de service ;
- la figure 10 est une vue en plan, prise de dessus, du noyau dans la position de service ;
- les figures 11 et 12 sont des vues en perspective respectivement de la première partie et de la deuxième partie du noyau ; et
- la figure 13 est une vue en élévation-coupe de la deuxième partie du noyau.

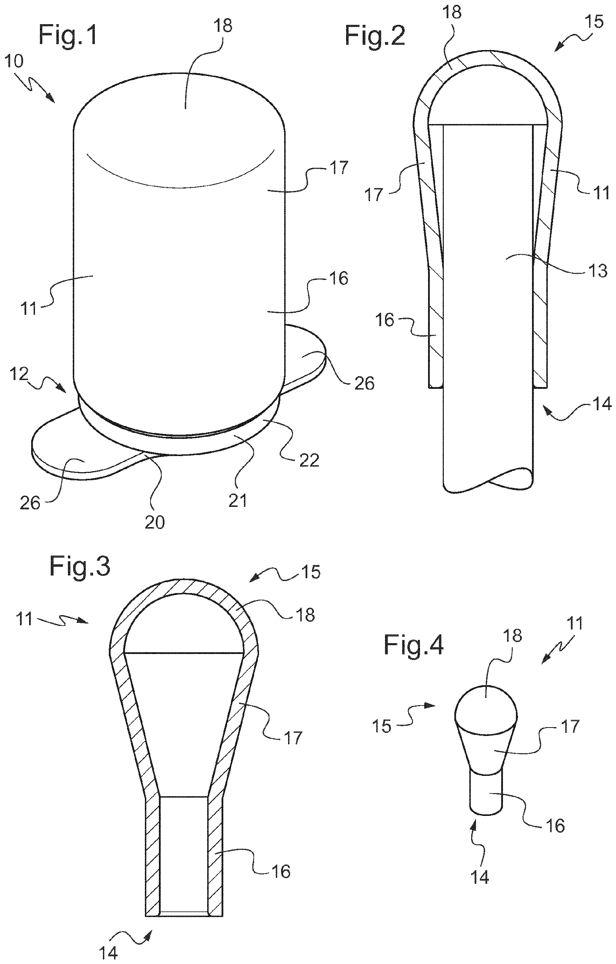

L'ensemble 10 montré sur la figure 1 comporte un capuchon élastique de protection 11 et un noyau 12.

Le capuchon 11 est en matière plastique élastique, ici en EPDM, en silicone ou en TPE (Thermo Plastique Elastomère).

Le noyau 12 est en matière plastique relativement rigide, ici en ABS.

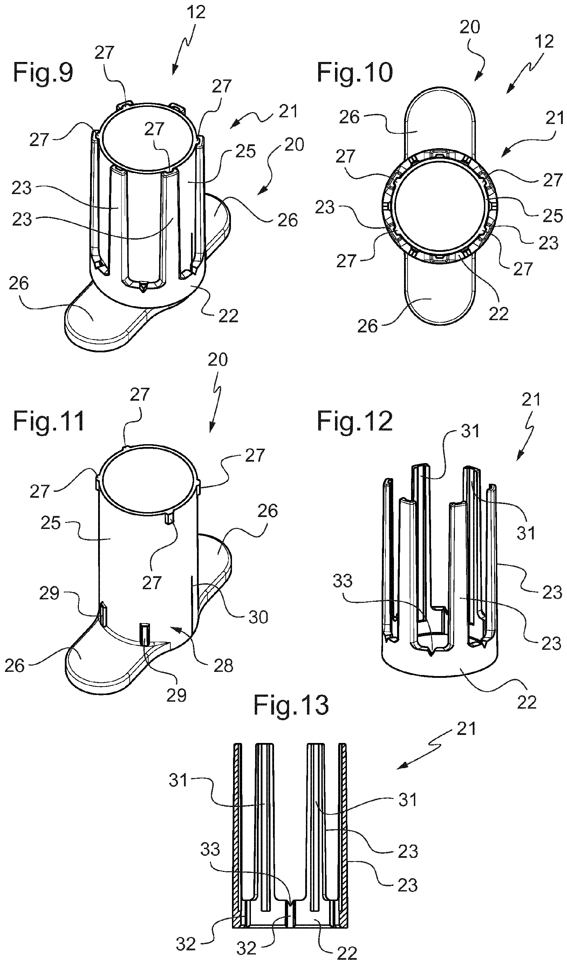

Dans l'ensemble 10, le capuchon 11 est en expansion, c'est-à-dire dans un état dilaté radialement par rapport à l'état naturel (figures 3 et 4) qu'il adopte en l'absence de contraintes externes. Le noyau 12 est en position de service (figure 9) et maintient en expansion le capuchon 11, lequel recouvre donc à enserrement le noyau 12.

L'espace interne au noyau 12, en position de service, est configuré pour recevoir un élément allongé, tel que le tronçon d'extrémité de câble électrique 13 illustré sur la figure 2, qui doit être recouvert par le capuchon 11.

La pose du capuchon 11 sur un élément allongé s'effectue en faisant coulisser le noyau 12 à la fois par rapport à l'élément allongé qui y est mis en place et par rapport au capuchon 11 pour que celui-ci vienne recouvrir à enserrement l'élément allongé, ainsi qu'expliqué ultérieurement plus en détails.

La figure 2 montre le tronçon d'extrémité de câble électrique 13 sur lequel est mis en place le capuchon 11.

Le capuchon 11 a globalement la forme d'un doigt de gant s'étendant d'une extrémité ouverte 14 à une extrémité fermée 15.

Comme on le voit sur les figures 3 et 4, le capuchon 11 comporte successivement, de son extrémité ouverte 14 à son extrémité fermée 15, une première partie 16, une deuxième partie 17 et une troisième partie 18.

A l'état naturel, la première partie 16 est à diamètre constant, la deuxième partie 17 est évasée avec un diamètre qui croît à partir de la première partie et la troisième partie 18 est bombée avec sa face concave du côté interne.

La troisième partie 18 ferme le capuchon 11 à son extrémité 15.

Ici, à l'état naturel, la deuxième partie 17 est tronconique et la troisième partie 18 est hémisphérique.

Le capuchon 11 est prévu pour recouvrir un élément allongé dont le diamètre est compris dans une plage prédéterminée.

Le tronçon d'extrémité de câble électrique 13 illustré sur la figure 2 a le diamètre minimum pour lequel est prévu le capuchon 11.

Comme on le voit en comparant les figures 2 et 3, le diamètre de la première portion 16 du capuchon 11 mis en place sur le tronçon d'extrémité de câble 13 est plus grand qu'à l'état naturel.

Le capuchon 11 enserre donc le tronçon d'extrémité de câble électrique 13 par sa première partie 16.

Le contact étroit entre le tronçon d'extrémité de câble électrique 13 et le capuchon 11 au niveau de sa première partie 16 et les propriétés de la matière dans laquelle est fait le capuchon 11, procurent une étanchéité à l'air et à l'eau ainsi qu'une isolation électrique.

Le diamètre maximum que peut prendre l'élément allongé à recouvrir par le capuchon 11 correspond au diamètre de l'espace interne au noyau 12.

Dans l'ensemble 10, le capuchon 11 est en expansion avec la troisième partie 18 sensiblement plane et légèrement dilatée tandis que la deuxième partie 17 et la troisième partie 18 ont sensiblement le même diamètre que le pourtour de la troisième partie 18 ainsi conformée.

Pour obtenir l'ensemble 10, le capuchon 11 est mis en place sur le noyau 12 en position de service après avoir été dilaté de façon bien connue.

Par exemple, le capuchon 11 est dilaté avec un outillage comportant un mandrin dont les mors sont formés par des tiges métalliques. Ce mandrin sert à dilater le capuchon 11. Le noyau est disposé à l'intérieur du capuchon 11 puis l'outillage est déplacé axialement par rapport au capuchon et par rapport au noyau.

On notera que l'agencement du capuchon 11 avec, à l'état naturel, la deuxième partie 17 qui est évasée et la troisième partie 18 qui est bombée, limite l'effort à exercer pour dilater le capuchon 11.

Le noyau 12 comporte une première partie 20 et une deuxième partie 21 associée à la première partie 20.

Ainsi qu'indiqué ci-dessus, dans l'ensemble 10 le noyau 12 est dans une position de service.

Dans cette position, la deuxième partie 21 recouvre extérieurement la première partie 20.

Dans l'ensemble 10, la première partie 20 est accessible du côté de l'extrémité ouverte 14 du capuchon 11.

Du fait de la conformation globalement tubulaire du noyau 12, un élément allongé tel que le tronçon d'extrémité de câble électrique 13 peut être inséré dans l'espace interne au noyau 12 en position de service.

En pratique, on enfonce l'élément allongé dans l'espace interne au noyau 12 de l'ensemble 10 jusqu'à ce que l'élément allongé vienne au contact de la troisième partie 18 du capuchon 11.

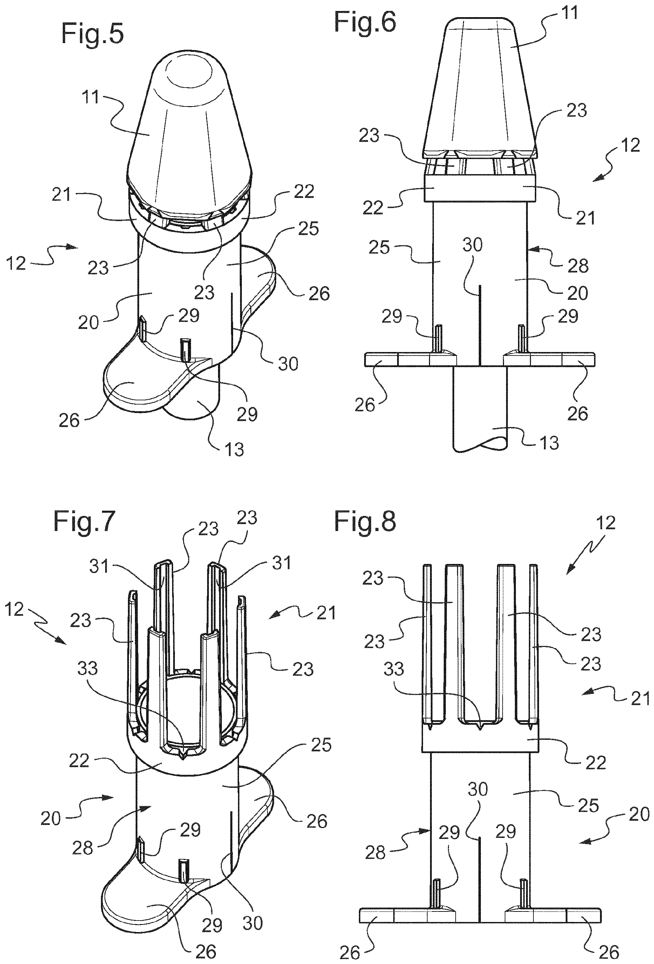

Le noyau 12 est prévu pour qu'une traction exercée alors sur la première partie 20 du côté de l'extrémité ouverte 14 du capuchon 11 fasse glisser la première partie 20 vis-à-vis de la deuxième partie 21 suivant un mouvement axial jusqu'à la position déployée montrée sur les figures 5 et 6 où la première partie 20 ne peut plus se déplacer vis-à-vis de la deuxième partie 21 dans le sens de la traction.

Comme on le voit bien sur les figures 7 à 9, la deuxième partie 21 comporte une collerette 22 et des pattes 23 saillant axialement de la collerette 22 et reliées les unes aux autres exclusivement par la collerette 22.

Dans la position de service (figures 1 et 9), la collerette 22 et les pattes 23 entourent la première partie 20.

Dans la position déployée (figures 5 à 8), la collerette 22 entoure la première partie 20 et les pattes 23 sont axialement au-delà de la première partie 20.

Lors du passage de la position de service à la position déployée, le tronçon de la deuxième partie 21 axialement au-delà de la première partie 20, lequel tronçon est formé par les pattes 23, prend progressivement une forme globalement tronconique, comme on le voit bien sur les figures 5 et 6.

Le tronçon de la deuxième partie 21 axialement au-delà de la première partie 20 prend une forme tronconique en raison de la sollicitation exercée par le capuchon 11 sur les pattes 23, qui n'entourent plus la première partie 20, et en raison de ce que les pattes 23 s'inclinent les unes vers les autres sous l'effet de cette sollicitation.

En pratique, les pattes 23 s'inclinent jusqu'à ce que leur extrémité distale soit en appui sur l'élément allongé tel que le tronçon d'extrémité de câble électrique 13.

Comme indiqué ci-dessus, le tronçon d'extrémité de câble électrique 13 illustré sur la figure 2, et aussi sur les figures 5 et 6, a le diamètre minimum pour lequel est prévu le capuchon 11. Lorsque l'élément allongé a un plus grand diamètre, la pente de la forme tronconique est plus faible.

Après que le noyau 12 a atteint la position déployée montrée sur les figures 5 et 6, on continue à exercer une traction sur la première partie 20 pour entraîner la deuxième partie 21 hors du capuchon 11 (le noyau 12 doit être entièrement extrait hors du capuchon 11).

La forme globalement tronconique prise par le tronçon de la deuxième partie 21 axialement au-delà de la première partie 20 favorise l'extraction de la deuxième partie 21 hors du capuchon 11, cette forme permettant de bénéficier d'une force d'expulsion de la deuxième partie 21 par le capuchon 11 du fait qu'il se contracte.

Dans certains cas, la force d'expulsion est suffisante pour entraîner la deuxième partie 21, seule une traction minime doit être exercée sur la première partie 20.

Entre la position de service (figures 1 et 9) et la position déployée (figures 5 à 8), la traction exercée sur la première partie 20 permet de la déplacer axialement par rapport à l'élément allongé tel que le tronçon d'extrémité de câble 13 et par rapport au capuchon 11 pour que celui-ci vienne recouvrir à enserrement l'élément allongé.

La deuxième partie 21 facilite le mouvement d'extraction de la première partie 20 qui n'a pas à glisser directement sur le capuchon 11.

La première partie 20 coulisse conventionnellement dans la deuxième partie 21, c'est-à-dire que la première partie 20 se déplace par rapport à la totalité de la deuxième partie 21 entre la position de service et la position déployée, qui sont fixées conventionnellement par des butées de fin de course.

On va maintenant décrire plus en détails la première partie 20 et la deuxième partie 21 du noyau 12.

La première partie 20 et la deuxième partie 21 sont fabriquées chacune en matière plastique moulée relativement rigide.

La première partie 20 comporte un fût creux 25 en forme de tube et deux oreilles 26 qui s'étendent transversalement au fût 25 vers l'extérieur à son extrémité prévue pour être située du côté de l'extrémité ouverte 14 du capuchon 11.

Les oreilles 26 permettent de saisir la première partie 20.

Le fût 25 présente, à son extrémité prévue pour être située du côté de l'extrémité fermée 15 du capuchon 11, des premières languettes 27 en saillie par rapport à la surface générale externe 28 du fût 25.

Ici, les premières languettes 27 sont au nombre de quatre.

Le fût 25 comporte également, à proximité des oreilles 26, des deuxièmes languettes 29 saillant de la surface générale 28 du fût 25.

Ici, les deuxièmes languettes 29 sont au nombre de quatre.

De chaque côté, entre les oreilles 26, le fût 25 présente une fente 30.

Ainsi qu'expliqué ci-dessus, la deuxième partie 21 comporte une collerette 22 et des pattes 23 saillant axialement de la collerette 22 et reliées les unes aux autres exclusivement par la collerette 22.

Ici, les pattes 23 sont au nombre de six, disposées équi-angulairement.

Dans chaque patte 23 est ménagée, du côté interne, une rainure 31 orientée axialement qui se prolonge dans la collerette 22.

Chaque rainure 31 débouche à l'extrémité distale de la patte 23 et est fermée à son autre extrémité, qui est située dans la collerette 22.

La collerette 22 comporte dans chaque tronçon situé entre deux pattes 23, à mi-distance entre ces deux pattes, du côté interne, une rainure 32 qui est ouverte à ses deux extrémités.

Une encoche 33 est pratiquée dans la matière de la collerette 22 au niveau de l'extrémité de chaque rainure 32 située du côté des pattes 23.

Les premières languettes 27 et les rainures 31 sont configurées pour que les premières languettes 27 puissent glisser le long des rainures 31, d'une extrémité à l'autre.

De même, les premières languettes 27 et les rainures 32 sont configurées pour que les premières languettes 27 puissent glisser le long des rainures 32, d'une extrémité à l'autre.

Enfin, les deuxièmes languettes 29 et les rainures 32 sont configurées pour que les deuxièmes languettes 29 puissent être logées dans les rainures 32.

L'assemblage de la première partie 20 et de la deuxième partie 21 s'effectue par simple encliquetage, en faisant pénétrer à force chaque première languette 27 dans une rainure 31 respective.

Pour ce faire, on place le côté de la première partie 20 où se trouve la collerette 22 en regard du côté de la deuxième partie 21 où se trouvent les premières languettes 27 (côté opposé à celui où se trouvent les oreilles 26) et on engage les premières languettes 27 dans les rainures 32 de la collerette 22.

On fait ensuite coulisser axialement la première partie 20 et la deuxième partie 21 l'une par rapport à l'autre jusqu'à ce que chaque première languette 27 se retrouve hors de la rainure 32 entre deux pattes 23 voisines.

On déplace ensuite angulairement la première partie 20 et la deuxième partie 21 l'une par rapport à l'autre en forçant un peu pour faire rentrer chaque première languette 27 dans la rainure 31 de la patte 23 au contact de laquelle est venue la première languette 27.

L'association de la première partie 20 et de la deuxième partie 21 est alors terminée.

La première partie 20 et la deuxième partie 21 peuvent alors coulisser l'une par rapport à l'autre entre deux positions de fin de course, respectivement la position de service où la collerette 22 vient contre les oreilles 26 et la position déployée où les premières languettes 27 viennent au contact de l'extrémité fermée des rainures 31 située dans la collerette 22.

Dans la position de service, chaque deuxième languette 29 est logée dans une rainure 32 respective.

Cela permet de vérifier le bon assemblage entre la première partie 20 et la deuxième partie 21. En effet, si les deuxièmes languettes 29 ne peuvent pas rentrer dans les rainures 32 de la collerette, c'est que la première partie 20 et la deuxième partie 21 ne sont pas correctement orientées angulairement l'une par rapport à l'autre, et donc que les premières languettes 27 ne sont pas dans les rainures 31.

En variante, il n'y a pas de deuxièmes languettes ou autre organes de vérification du bon assemblage de la première partie et de la deuxième partie.

Pour des questions de commodité de moulage, les premières languettes 27 et les deuxièmes languettes 29 sont moins nombreuses que les pattes 23 et donc moins nombreuses que les rainures 31 et les rainures 32 (il y a quatre premières languettes 27 et quatre deuxième languettes 29 alors qu'il y a six pattes 23).

En variante, il y a autant de languettes que de pattes ou l'écart entre le nombre de languettes et le nombre de pattes est différent, par exemple l'écart est de un ou de trois au lieu d'être de deux ; et/ou lorsqu'il y a un écart certaines pattes ne sont pas pourvues d'une rainure.

On notera que les pattes 23 sont configurées pour être relativement rigides, afin que la deuxième pièce 21 ne se déforme pas par fléchissement des pattes 23 ou alors avec peu de fléchissement, mais pour l'essentiel par basculement des pattes 23 pour qu'elles s'inclinent les unes vers les autres, la déformation se produisant majoritairement dans la collerette 22.

En particulier, l'épaisseur et la largeur des pattes 23 (et donc leur nombre) ont été déterminées pour ce faire.

Ainsi, la surface de contact des pattes 23 avec l'élément allongé mis dans l'espace interne au noyau 22 reste petite et l'extraction du noyau 22 n'est pas gênée ou peu gênée par le frottement entre les pattes 23 et l'élément allongé.

Au surplus, l'absence de fléchissement des pattes 23 ou en tout cas le faible fléchissement des pattes 23 est favorable au glissement entre les pattes 23 et le capuchon 11, étant donné que le fléchissement rendrait les pattes 23 concaves du côté du capuchon 11.

En variante, le nombre de pattes 23 est différent de six, par exemple quatre ou huit.

La fente 30 et les encoches 33 sont des amorces de rupture pour briser respectivement la première partie 20 et la deuxième partie 21 pour les enlever de l'élément allongé après la pose du capuchon 11.

En variante, les amorces de rupture sont différentes, par exemple des trous ou des zones de paroi à épaisseur réduite.

Dans des variantes non illustrée, le capuchon de protection 11 est remplacé par un autre corps tubulaire élastique de protection, par exemple un manchon ouvert à ses deux extrémités, avec un seul noyau tel que le noyau 12 si le manchon est relativement court ou avec deux noyaux tels que le noyau 12 disposés tête-bêche si le manchon est relativement long.

L'invention n'est limitée que par les revendications annexées.

## Revendications

1. Ensemble pour recouvrir à enserrement un élément allongé (13) de dimensions prédéterminées avec un corps tubulaire élastique de protection (11) ouvert à au moins une extrémité, comportant :
- ledit corps tubulaire élastique (11) ; et
- un noyau tubulaire (12) de maintien en expansion dudit corps tubulaire élastique (11), comportant une première partie (20) et une deuxième partie (21) assemblée à la première partie (20), le noyau tubulaire (12) étant dans une position de service où la deuxième partie (21) recouvre extérieurement la première partie (20) avec la première partie (20) qui est accessible du côté de l'extrémité ouverte (14) du corps tubulaire élastique (11), le noyau tubulaire (12) étant configuré pour que l'élément allongé (13) puisse être inséré dans l'espace interne au noyau (12) en position de service et pour qu'une traction exercée alors sur la première partie (20) du côté de l'extrémité ouverte (14) du corps tubulaire élastique (11) fasse glisser la première partie (20) vis-à-vis de la deuxième partie (21) suivant un mouvement axial jusqu'à une position déployée où la première partie (20) ne peut plus se déplacer vis-à-vis de la deuxième partie (21) dans le sens de la traction ;
**caractérisé en ce que** la deuxième partie (21) comporte une collerette (22) et des pattes (23) saillant axialement de la collerette (22) et reliées les unes aux autres exclusivement par la collerette (22) ; dans la position de service la collerette (22) et les pattes (23) entourent la première partie (20) ; et dans la position déployée la collerette (22) entoure la première partie (20) et les pattes (23) sont axialement au-delà de la première partie (20).

2. Ensemble selon la revendication 1, dans laquelle la première partie (20) et la deuxième partie (21) du noyau (12) sont en matière plastique moulée assemblées l'une à l'autre par encliquetage.

3. Ensemble selon l'une quelconque des revendications 1 ou 2, où dans au moins une dite patte (23) est ménagée, du côté interne, une rainure (31) orientée axialement tandis que ladite première partie (20) comporte une languette (27), ladite rainure (31) et ladite languette (27) étant configurées pour que ladite languette (27) puisque glisser le long de ladite rainure (31).

4. Ensemble selon la revendication 3, dans laquelle ladite rainure (31) est fermée du côté de ladite collerette (22), ladite languette (27) venant au contact de l'extrémité fermée de ladite rainure (31) dans la position déployée.

5. Ensemble selon l'une quelconque des revendications 3 ou 4, où ladite collerette (22) comporte dans au moins un tronçon situé entre deux dites pattes (23), du côté interne, une rainure (32) qui est ouverte à ses deux extrémités, ladite languette (27) et ladite rainure (32) étant configurées pour que ladite languette (27) puisque glisser le long de ladite rainure (32) d'une extrémité à l'autre, ladite première partie (20) et ladite deuxième partie (21) étant configurées pour coulisser l'une par rapport à l'autre jusqu'à ce que ladite languette (27) se retrouve hors de ladite rainure (32) entre deux dites pattes (23) voisines, et pour qu'un déplacement angulaire de la première partie (20) et de la deuxième partie (21) l'une par rapport à l'autre en forçant puisse faire rentrer ladite languette (27) dans ladite rainure (31) ménagée dans ladite patte (23).

6. Ensemble selon l'une quelconque des revendications 3 à 5, où ladite première partie (20) comporte un fût creux (25) en forme de tube présentant ladite languette (27) en saillie par rapport à sa surface générale externe (28).

7. Ensemble selon l'une quelconque des revendications 1 à 6, où ladite première partie (20) et ladite deuxième partie (21) comportent des organes (29, 32) de vérification du bon assemblage de la première partie (20) et de la deuxième partie (21).

8. Ensemble selon l'une quelconque des revendications 1 à 7, où ladite deuxième partie (21) est configurée pour se déformer en raison de la sollicitation exercée par le corps tubulaire élastique (11) sur les pattes (23) après que le noyau (12) a été amené de la position de service à la position déployée, pour l'essentiel par basculement des pattes (23).

9. Ensemble selon l'une quelconque des revendications 1 à 8, où ledit corps tubulaire élastique de protection est un capuchon (11) fermé à son extrémité (15) opposée à ladite extrémité ouverte (14).

10. Ensemble selon la revendication 9, où, à l'état naturel, ledit capuchon (11) comporte successivement, de son extrémité ouverte (14) à son extrémité fermée (15), une première partie (16) à diamètre constant, une deuxième partie (17) évasée avec un diamètre qui croît à partir de la première partie (16) et une troisième partie (18) qui est bombée avec sa face concave du côté interne.

## Patentansprüche

1. Anordnung zum einklemmenden Abdecken eines länglichen Elements (13) mit vorbestimmten Abmessungen mittels eines elastischen, röhrenförmigen Schutzkörpers (11), der an zumindest einem Ende offen ist, enthaltend:
- den genannten elastischen, röhrenförmigen Körper (11); und
- einen röhrenförmigen Kern (12) zum Halten des elastischen, röhrenförmigen Körpers (11) im aufgeweiteten Zustand, welcher Kern ein erstes Teil (20) und ein mit dem ersten Teil (20) zusammengefügtes zweites Teil (21) aufweist, wobei der röhrenförmige Kern (12) sich in einer Betriebsstellung befindet, in der das zweite Teil (21) das erste Teil (20) außen abdeckt und wobei das zweite Teil (20) von der Seite des offenen Endes (14) des elastischen, röhrenförmigen Körpers (14) zugänglich ist, wobei der röhrenförmige Kern (12) so ausgelegt ist, dass das längliche Element (13) in den Innenraum des Kerns (12) in Betriebsstellung eingeführt werden kann und eine dann auf das erste Teil (20) auf der Seite des offenen Endes (14) des elastischen, röhrenförmigen Körpers (11) ausgeübte Zugkraft das erste Teil (20) bezüglich des zweiten Teils (21) mit einer axialen Bewegung in eine ausgefahrene Stellung gleiten lässt, in der das erste Teil (20) sich nicht mehr bezüglich des zweiten Teils (21) in Zugkraftrichtung bewegen kann;
**dadurch gekennzeichnet, dass**
das zweite Teil (21) einen Kragen (22) und Laschen (23) aufweist, die axial von dem Kragen (22) abstehen und ausschließlich über den Kragen (22) miteinander verbunden sind; wobei in der Betriebsstellung der Kragen (22) und die Laschen (23) das erste Teil (20) umgreifen; und wobei in der ausgefahrenen Stellung der Kragen (22) das erste Teil (20) umgreift und die Laschen (23) axial über das erste Teil (20) hinausstehen.

2. Anordnung nach Anspruch 1, wobei das erste Teil (20) und das zweite Teil (21) des Kerns (12) aus geformtem Kunststoffmaterial bestehen und durch Schnappverbindung zusammengefügt sind.

3. Anordnung nach einem der Ansprüche 1 oder 2, wobei in mindestens einer Lasche (23) auf der Innenseite eine axial ausgerichtete Nut (31) vorgesehen ist, während das erste Teil (20) eine Zunge (27) aufweist, wobei die Nut (31) und die Zunge (27) so ausgelegt sind, dass die Zunge (27) entlang der Nut (31) gleiten kann.

4. Anordnung nach Anspruch 3, wobei die Nut (31) auf der Seite des Kragens (22) geschlossen ist, wobei die Zunge (27) in der ausgefahrenen Stellung mit dem geschlossenen Ende der Nut (31) in Kontakt gelangt.

5. Anordnung nach einem der Ansprüche 3 oder 4, wobei der Kragen (22) in mindestens einem Abschnitt zwischen den beiden Laschen (23) auf der Innenseite eine Nut (32) aufweist, die an ihren beiden Enden offen ist, wobei die Zunge (27) und die Nut (32) so ausgelegt sind, dass die Zunge (27) entlang der Nut (32) von einem Ende zum anderen gleiten kann, wobei das erste Teil (20) und das zweite Teil (21) dazu ausgelegt sind, sich relativ zueinander soweit zu verschieben, bis die Zunge (27) sich außerhalb der Nut (32) zwischen den beiden benachbarten Laschen (23) befindet, und dass durch eine Winkelverlagerung des ersten Teils (20) und des zweiten Teils (21) relativ zueinander die Zunge (27) zwangsweise in die in der Lasche (23) ausgebildete Nut (31) eingeführt wird.

6. Anordnung nach einem der Ansprüche 3 bis 5, wobei das erste Teil (20) einen hohlen, rohrförmigen Schaft (25) enthält, der die von seiner generell äußeren Fläche (28) abstehende Zunge (27) aufweist.

7. Anordnung nach einem der Ansprüche 1 bis 6, wobei das erste Teil (20) und das zweite Teil (21) Elemente (29, 32) zum Überprüfen der richtigen Zusammenfügung des ersten Teils (20) und des zweiten Teils (21) enthalten.

8. Anordnung nach einem der Ansprüche 1 bis 7, wobei das zweite Teil (21) dazu ausgelegt ist, sich aufgrund der durch den elastischen, röhrenförmigen Körper (11) auf die Laschen (23) ausgeübten Beaufschlagung zu verformen, nachdem der Kern (12) von der Betriebsstellung in die ausgefahrene Stellung gebracht worden ist, und zwar im Wesentlichen durch Verschwenken der Laschen (23).

9. Anordnung nach einem der Ansprüche 1 bis 8, wobei der elastische, röhrenförmige Schutzkörper eine Kappe (11) ist, die an ihrem dem offenen Ende (14) gegenüberliegenden Ende (15) geschlossen ist.

10. Anordnung nach Anspruch 9, wobei die Kappe (11) im unbelasteten Zustand von ihrem offenen Ende (14) zu ihrem geschlossenen Ende (15) hin nacheinander einen ersten Abschnitt (16) mit konstantem Durchmesser, einen zweiten Abschnitt (17), der sich mit einem vom ersten Abschnitt (16) aus zunehmenden Durchmesser erweitert, und einen dritten Abschnitt (18) aufweist, der mit seiner konkaven Fläche auf der Innenseite gewölbt ist.

## Claims

1. An assembly for tightly covering an elongate member (13) of predetermined dimensions with a protective elastic tubular body (11) open at one end at least, comprising:
- said elastic tubular body (11); and
- a tubular core (12) for holding said elastic tubular body expanded (11), comprising a first part (20) and a second part (21) associated with the first part (20), the tubular core (12) being in an operating position in which the second part (21) externally covers the first part (20) with the first part (20) accessible by the open end (14) of the elastic tubular body (11), the tubular core (12) being configured for the elongate member (13) to be able to be inserted into the internal space of the core (12) in operating position and for a pull then applied on the first part (20) by the open end (14) of the elastic tubular body (11) to make the first part (20) slide relative to the second part (21) in a an axial movement to reach an extended position in which the first part (20) can no longer move relative to the second part (21) in the direction of pulling;
**characterized in that**
the second part (21) comprises a collar (22) and legs (23) axially projecting from the collar (22) and connected to each other exclusively by the collar (22); in the operating position the collar (22) and the legs (23) surround the first part (20); and in the extended position the collar (22) surrounds the first part (20) and the legs (23) are axially beyond the first part (20).

2. An assembly according to claim 1, wherein the first part (20) and the second part (21) of the core (12) are of molded plastics material and are associated with each other by snap engagement.

3. An assembly according to any one of claims 1 or 2, in which in at least one said leg (23) there is formed, on its inner side, an axially oriented groove (31) while said first part (20) comprises a tab (27), said groove (31) and said tab (27) being configured for said tab (27) to be able to slide along said groove (31).

4. An assembly according to claim 3, wherein said groove (31) is closed at the end by said collar (22), said tab (27) coming into contact with the closed end of said groove (31) in the extended position.

5. An assembly according to any one of claims 3 or 4, in which said collar (22) comprises in at least one portion situated between two said legs (23), on its inner side, a groove (32) which is open at both its ends, said tab (27) and said groove (32) being configured in order for said tab (27) to be able to slide along said groove (32) from one end to the other, said first part (20) and said second part (21) being configured to slide relative to each other until said tab (27) is located out of said groove (32) between two said legs (23) which are neighboring, and in order for an angular movement of the first part (20) and of the second part (21) relative to each other by forcing to be able to make said tab (27) enter said groove (31) provided in said leg (23).

6. An assembly according to any one of claims 3 to 5, in which said first part (20) comprises a hollow barrel (25) in the form of a tube having said tab (27) projecting relative to its outside general surface (28).

7. An assembly according to any one of claims 1 to 6, in which said first part (20) and said second part (21) comprise members (29, 32) for verifying the proper assembly of the first part (20) and of the second part (21).

8. An assembly according to any one of claims 1 to 7, in which said second part (21) is configured in order to deform on account of the legs (23) being acted upon by the elastic tubular body (11) after the core (12) has been brought from the operating position to the extended position, mainly by pivoting of the legs (23).

9. An assembly according to any one of claims 1 to 8, in which said protective elastic tubular body is a cap (11) closed at its opposite end (15) to said open end (14).

10. An assembly according to claim 9, in which in the natural state, said cap (11) successively comprises, from its open end (14) to its closed end (15), a first part (16) of uniform diameter, a second flared part (17) with a diameter which increases from the first part (16) and a third part (18) which is domed with its concave face on the inner side.
